# EUROPEAN PATENT APPLICATION

(11) **EP 4 811 901 A1**
(43) Date of publication of application: **23.09.2026**
(21) Application number: 23958862.7
(22) Date of filing: 15.11.2023
(51) Int. Cl.: H04W 72/0457, H04W 4/00, H04W 16/02, H04W 92/16

(54) **NETWORK DEVICE, WIRELESS COMMUNICATION SYSTEM, AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP); SAGAE Yuta, Tokyo 100-6150 (JP); HANAKI Akihito, Tokyo 100-6150 (JP)
(74) Representative: Hoffmann Eitle
(86) International application number: PCT/JP2023/041161
(87) International publication number: WO 2025/104856

(57) **Abstract**

A network apparatus includes: a control unit that controls communication of a first network; and a transmission unit that transmits information regarding a radio resource used in the first network to a second network. The information regarding the radio resource is information regarding a resource group grouped for each resource unit of the radio resource.

## Description

### Technical Field

The present disclosure relates to a network apparatus, a radio communication system, and a radio communication method supporting migration of two or more networks.

### Background Art

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

Prior to 5G, in Dual connectivity in which a UE is connected to a node of a 4G RAN (Radio Access Network) and a node of a 5G RAN, coordination between the 4G RAN and the 5G RAN has been studied (for example, Non-Patent Literature 1).

### Citation List

### Non-Patent Literature

Non-Patent Literature 1: 3GPP TS 36.423 V17.6.0, 3rd Generation Partnership Project, Technical Specification Group Radio Access Network, Evolved Universal Terrestrial Radio Access Network (E-UTRAN), X2 application protocol (X2AP)(Release 17)

### Summary Of Invention

Meanwhile, in migration from an existing technology (hereinafter, 5G) to a new technology (hereinafter, 6G), a method of deploying a node of a 6G RAN in Dual
connectivity, a method of deploying a node of a 6G RAN in stand-alone, and the like are assumed.

As a result of intensive studies, the inventors focused on coordination between a 5G RAN and a 6G RAN, and found that coordination of information different from coordination between a 4G RAN and a 5G RAN is required.

Therefore, the present disclosure has been made to solve the above-described problem, and an object of the present disclosure is to provide a network apparatus, a radio communication system, and a radio communication method capable of appropriately executing coordination between a 5G RAN and a 6G RAN.

An aspect of the present disclosure is a network apparatus comprising: a control unit that controls communication of a first network; and a transmission unit that transmits information regarding a radio resource used in the first network to a second network, wherein the information regarding the radio resource is information regarding a resource group grouped for each resource unit of the radio resource.

An aspect of the present disclosure is a radio communication system comprising: a terminal; and a network apparatus provided in a first network, wherein the network apparatus comprises a control unit that controls communication of the first network, and a transmission unit that transmits information regarding a radio resource used in the first network to a second network, and the information regarding the radio resource is information regarding a resource group grouped for each resource unit of the radio resource.

An aspect of the present disclosure is a radio communication method comprising: a step of controlling communication of a first network; and a step of transmitting information regarding a radio resource used in the first network to a second network, wherein the information regarding the radio resource is information regarding a resource group grouped for each resource unit of the radio resource.

### Brief Description of Drawings

[Fig. 1] Fig. 1 is an overall schematic configuration diagram of a radio communication system 10.
[Fig. 2] Fig. 2 is a diagram illustrating a frequency range used in a cellular network.
[Fig. 3] Fig. 3 is a diagram illustrating a configuration example of a radio frame, a subframe, and a slot used in a cellular network.
[Fig. 4] Fig. 4 is a functional block configuration diagram of a UE 200.
[Fig. 5] Fig. 5 is a functional block configuration diagram of a network apparatus 50.
[Fig. 6] Fig. 6 is a diagram for describing Operation Example 1.
[Fig. 7] Fig. 7 is a diagram for describing Operation Example 1.
[Fig. 8] Fig. 8 is a diagram for describing Operation Example 1.
[Fig. 9] Fig. 9 is a diagram for describing Operation Example 1.
[Fig. 10] Fig. 10 is a diagram for describing Operation Example 1.
[Fig. 11] Fig. 11 is a diagram illustrating an example of a hardware configuration of a gNB 100 and a UE 200.
[Fig. 12] Fig. 12 is a diagram illustrating a configuration example of a vehicle 2001.

### Description of Embodiments

Hereinafter, embodiments will be described based on the drawings. Note that the same or similar reference numerals are given to the same functions and configurations, and the description thereof will be omitted as appropriate.

### [Embodiment]

### (1) Overall schematic configuration of radio communication system

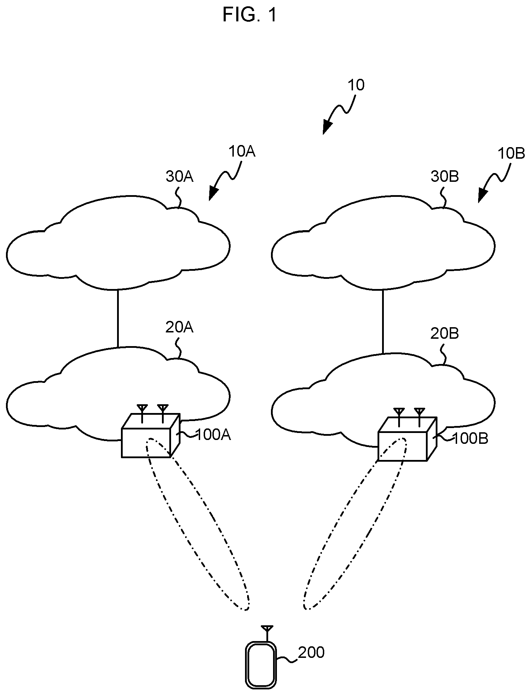

Fig. 1 is an overall schematic configuration diagram of a radio communication system 10 according to the embodiment. The radio communication system 10 includes a terminal 200 (hereinafter, UE (User Equipment) 200), a first network 10A, and a second network 10B.

The first network 10A includes a radio access network 20A and a core network 30A. The radio access network 20A includes a base station 100A that executes radio communication with the UE 200. Note that the first network 10A may not include the radio access network 20A and may include the base station 100A. The first network 10A may not include the core network 30A. The base station 100A may be configured by a DU (Distributed Unit) and a CU (Central Unit). The DU may execute processing of a layer below a MAC layer. The CU may execute processing of a PDCP layer and above.

The first network 10A may be a network according to a new technology (6G). 6G may be referred to as Beyond 5G or 5G Evolution. The first network 10A may be a network according to an existing technology (5G). 5G may be referred to as 5G New Radio (NR).

The second network 10B includes a radio access network 20B and a core network 30B. The radio access network 20B includes a base station 100B that executes radio communication with the UE 200. Note that the second network 10B may not include the radio access network 20B and may include the base station 100B. The second network 10B may not include the core network 30B. The base station 100B may be configured by a DU and a CU.

The second network 10B may be a network according to an existing technology (5G). 5G may be referred to as 5G New Radio (NR). The second network 10B may be a network according to a new technology (6G). 6G may be referred to as Beyond 5G or 5G Evolution.

Here, the first network 10A and the second network 10B only need to have different radio access schemes. For example, the radio access scheme may be a radio access scheme of a cellular network referred to as 5G, Beyond 5G, 5G Evolution, 6G, or the like.

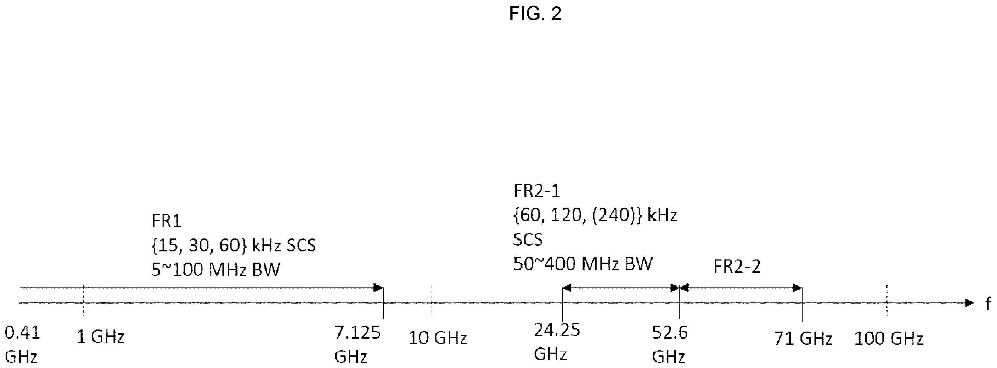

First, the cellular network may correspond to a plurality of frequency ranges (FRs) illustrated in Fig. 2. For example, as illustrated in Fig. 2, the cellular network may correspond to FR1 and FR2. A frequency band of each FR is as follows.
- FR1: 410 MHz to 7.125 GHz
- FR2-1: 24.25 GHz to 52.6 GHz
- FR2-2: over 52.6 GHz to 71 GHz

In FR1, Sub-Carrier Spacing (SCS) of 15, 30, or 60 kHz may be used, and a bandwidth (BW) of 5 to 100 MHz may be used. FR2 has a higher frequency than FR1, SCS of 60 kHz or 120 kHz (240 kHz may be included) may be used, and a bandwidth (BW) of 50 to 400 MHz may be used.

Furthermore, the cellular network may also correspond to a higher frequency band than the frequency band of FR2. Specifically, the cellular network corresponds to a frequency band exceeding 52.6 GHz and up to 71 GHz or 114.25 GHz.

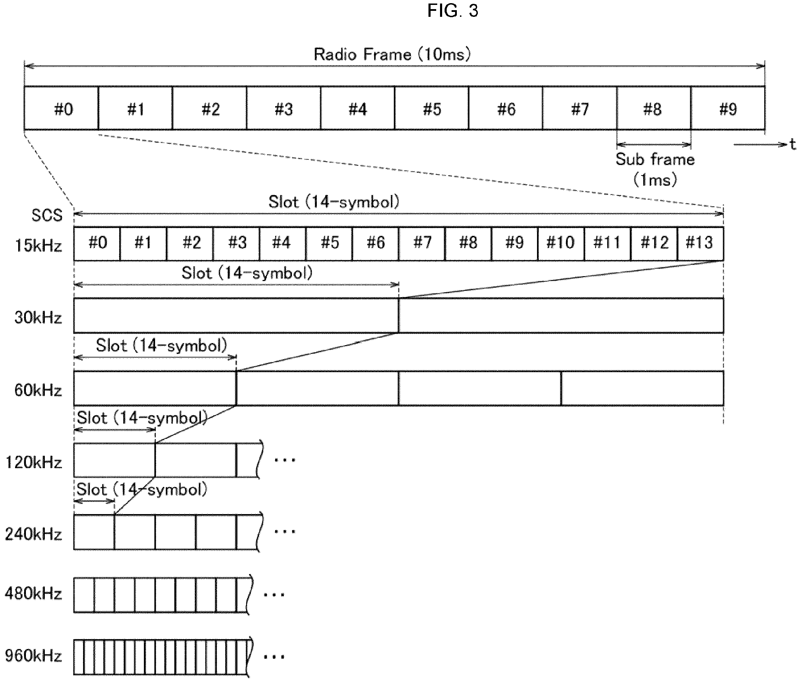

Second, the cellular network may correspond to a radio frame, a subframe, and a slot illustrated in Fig. 3.

As illustrated in Fig. 3, 1 slot is configured with 14 symbols, and a symbol period (and slot period) becomes shorter as the SCS becomes larger (wider). For the SCS, 480 kHz, 960 kHz, and the like may be used in addition to 15 kHz, 30 kHz, 60 kHz, 120 kHz, 240 kHz, and the like.

Also, the number of symbols configuring 1 slot does not necessarily have to be 14 symbols (for example, 28 symbols, 56 symbols). Furthermore, the number of slots per subframe may differ depending on the SCS.

Note that a time direction (t) illustrated in Fig. 3 may be referred to as a time domain, a symbol period, a symbol time, or the like. Also, a frequency direction may be referred to as a frequency domain, a resource block, a subcarrier, a Bandwidth part (BWP), or the like.

### (2) Functional block configuration of radio communication system

In the following, a functional block configuration of the radio communication system 10 will be described.

First, a functional block configuration of the UE 200 will be described.

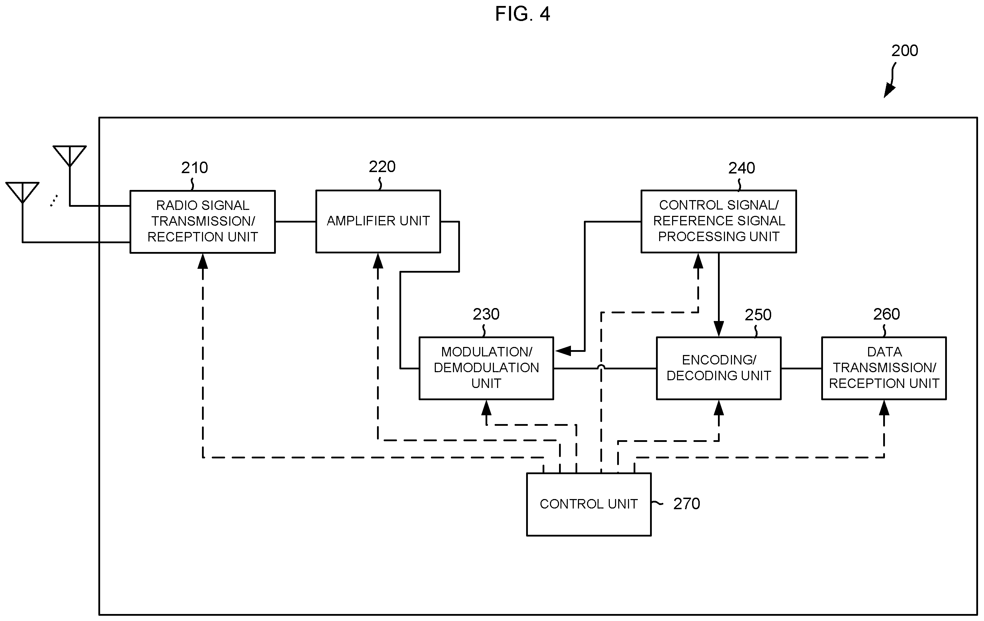

Fig. 4 is a functional block configuration diagram of the UE 200. As illustrated in Fig. 4, the UE 200 includes a radio signal transmission and reception unit 210, an amplifier unit 220, a modulation and demodulation unit 230, a control signal and reference signal processing unit 240, an encoding and decoding unit 250, a data transmission and reception unit 260, and a control unit 270.

The radio signal transmission and reception unit 210 transmits and receives a radio signal according to NR. The radio signal transmission and reception unit 210 supports Massive MIMO, CA (Carrier Aggregation) that uses a plurality of bundled CCs, DC (Dual Connectivity) in which communication is simultaneously performed between the UE and each of two NG-RAN Nodes, and the like.

The amplifier unit 220 is configured by a PA (Power Amplifier)/LNA (Low Noise Amplifier) and the like. The amplifier unit 220 amplifies a signal output from the modulation and demodulation unit 230 to a predetermined power level. Also, the amplifier unit 220 amplifies an RF signal output from the radio signal transmission and reception unit 210.

The modulation and demodulation unit 230 executes data modulation/demodulation, transmission power setting, resource block allocation, and the like for each predetermined communication destination (gNB 100 or another gNB). In the modulation and demodulation unit 230, Cyclic Prefix-Orthogonal Frequency Division Multiplexing (CP-OFDM)/Discrete Fourier Transform - Spread (DFT-S-OFDM) may be applied. Also, DFT-S-OFDM may be used not only for an uplink (UL) but also for a downlink (DL).

The control signal and reference signal processing unit 240 executes processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, a control signal of a radio resource control (RRC) layer. Also, the control signal and reference signal processing unit 240 transmits various control signals to the gNB 100 via a predetermined control channel.

The control signal and reference signal processing unit 240 executes processing using a reference signal (RS) such as a Demodulation Reference Signal (DM-RS) and a Phase Tracking Reference Signal (PT-RS).

The DM-RS is a known reference signal (pilot signal) between the base station and the terminal specific to the terminal for estimating a fading channel used for data demodulation. The PT-RS is a reference signal specific to the terminal aimed at estimating phase noise, which is an issue in a high frequency band.

Note that the reference signal may include a Channel State Information-Reference Signal (CSI-RS), a Sounding Reference Signal (SRS), and a Positioning Reference Signal (PRS) for location information, in addition to the DM-RS and the PT-RS.

Also, a channel includes a control channel and a data channel. The control channel includes a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), and the like.

Also, the data channel includes a PDSCH (Physical Downlink Shared Channel), a PUSCH (Physical Uplink Shared Channel), and the like. Data means data transmitted via the data channel. The data channel may be read as a shared channel.

Here, the control signal and reference signal processing unit 240 may receive downlink control information (DCI). The DCI includes, as existing fields, fields that store DCI Formats, a Carrier indicator (CI), a BWP indicator, an FDRA (Frequency Domain Resource Assignment), a TDRA (Time Domain Resource Assignment), an MCS (Modulation and Coding Scheme), an HPN (HARQ Process Number), an NDI (New Data Indicator), an RV (Redundancy Version), and the like.

A value stored in the DCI Format field is an information element that specifies a format of the DCI. A value stored in the CI field is an information element that specifies a CC to which the DCI is applied. A value stored in the BWP indicator field is an information element that specifies a BWP to which the DCI is applied. The BWP that can be specified by the BWP indicator is configured by an information element (BandwidthPart-Config) included in an RRC message. A value stored in the FDRA field is an information element that specifies a frequency domain resource to which the DCI is applied. The frequency domain resource is specified by the value stored in the FDRA field and an information element (RA Type) included in the RRC message. A value stored in the TDRA field is an information element that specifies a time domain resource to which the DCI is applied. The time domain resource is specified by the value stored in the TDRA field and information elements (pdsch-TimeDomainAllocationList, pusch-TimeDomainAllocationList) included in the RRC message. The time domain resource may be specified by the value stored in the TDRA field and a default table. A value stored in the MCS field is an information element that specifies an MCS to which the DCI is applied. The MCS is specified by the value stored in the MCS and an MCS table. The MCS table may be specified by the RRC message, and may be specified by RNTI scrambling. A value stored in the HPN field is an information element that specifies an HARQ Process to which the DCI is applied. A value stored in the NDI is an information element for specifying whether data to which the DCI is applied is initial transmission data. A value stored in the RV field is an information element that specifies redundancy of data to which the DCI is applied.

The encoding and decoding unit 250 executes division/concatenation of data, channel coding/decoding, and the like for each predetermined communication destination (gNB 100 or another gNB).

Specifically, the encoding and decoding unit 250 divides data output from the data transmission and reception unit 260 into a predetermined size, and executes channel coding on the divided data. Also, the encoding and decoding unit 250 decodes data output from the modulation and demodulation unit 230, and concatenates the decoded data.

The data transmission and reception unit 260 executes transmission and reception of a Protocol Data Unit (PDU) and a Service Data Unit (SDU). Specifically, the data transmission and reception unit 260 executes assembly/disassembly of a PDU/SDU in a plurality of layers (a Medium Access Control (MAC) layer, a Radio Link Control (RLC) layer, a Packet Data Convergence Protocol (PDCP) layer, and the like). Also, the data transmission and reception unit 260 executes data error correction and retransmission control based on HARQ (Hybrid Automatic Repeat Request).

The control unit 270 controls each functional block configuring the UE 200. In the embodiment, the control unit 270 executes communication with at least any one of the first network 10A and the second network 10B under an assumption that coordination between the first network 10A and the second network 10B is executed. The coordination between the first network 10A and the second network 10B will be described later.

Second, a functional block configuration of the network apparatus 50 will be described. For example, the network apparatus 50 is provided in the first network 10A or the second network 10B. That is, the network apparatus 50 may be the base station 100A, may be a CU configuring a part of the base station 100A, or may be a DU configuring a part of the base station 100A. The network apparatus 50 may be the base station 100B, may be a CU configuring a part of the base station 100B, or may be a DU configuring a part of the base station 100B.

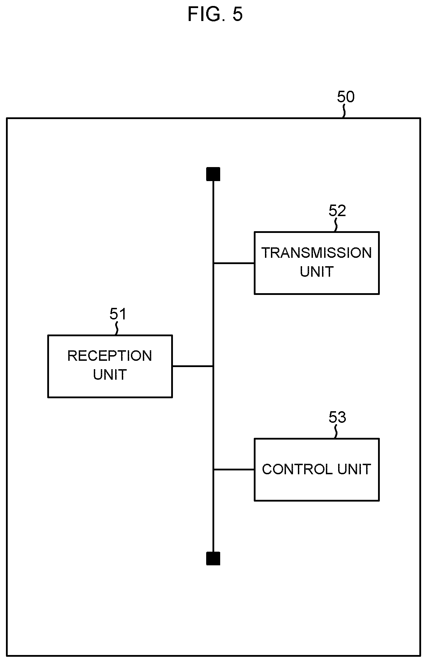

As illustrated in Fig. 5, the network apparatus 50 includes a reception unit 51, a transmission unit 52, and a control unit 53.

The reception unit 51 receives various signals from the UE 200. The reception unit 51 may receive a control signal (PUCCH), and may receive a data signal (PUSCH).

The transmission unit 52 transmits various signals to the UE 200. The transmission unit 52 may transmit a control signal (PDCCH), and may transmit a data signal (PDSCH).

In the embodiment, when the network apparatus 50 is provided in the first network 10A, the transmission unit 52 configures a transmission unit that transmits information regarding a radio resource used in the first network 10A to the second network 10B.

Note that, when the network apparatus 50 is provided in the second network 10B, the reception unit 51 may receive information regarding a radio resource used in the first network 10A from the first network 10A.

The control unit 53 controls each block configuring the network apparatus 50. In the embodiment, when the network apparatus 50 is provided in the first network 10A, the control unit 130 configures a control unit that controls communication of the first network 10A. Communication of the first network 10A may include communication of an uplink signal (PUCCH, PUSCH) transmitted from the UE 200, and may include communication of a downlink signal (PDCCH, PDSCH) transmitted from the base station 100A. The communication of the first network 10A may include a reference signal (SRS) transmitted from the UE 200. The communication of the first network 10A may include communication of a synchronization signal (SSB; Synchronization Signal Block) transmitted from the base station 100A, and a reference signal (for example, a CSI-RS, a DM-RS, a PT-RS, a PRS, and a TRS (Tracking Reference Signal)) transmitted from the base station 100A. The SSB may include a PSS (Primary Synchronization Signal), an SSS (Secondary Synchronization Signal), a PBCH, and a DM-RS for PBCH.

Note that, when the network apparatus 50 is provided in the second network 10B, communication of the second network 10B may be controlled. Communication of the second network 10B may include communication of an uplink signal (PUCCH, PUSCH) transmitted from the UE 200, and may include communication of a downlink signal (PDCCH, PDSCH) transmitted from the base station 100B. The communication of the second network 10B may include an SRS) transmitted from the UE 200. The communication of the second network 10B may include communication of a synchronization signal (SSB) transmitted from the base station 100B, and a reference signal (for example, a CSI-RS, a DM-RS, a PT-RS, a PRS, and a TRS) transmitted from the base station 100B. The SSB may include a PSS, an SSS, a PBCH, and a DM-RS for PBCH.

### (3) Problem

In migration from an existing technology (hereinafter, 5G) to a new technology (hereinafter, 6G), a method of deploying a node of a 6G RAN in Dual connectivity, a method of deploying a node of a 6G RAN in stand-alone, and the like are assumed.

As a result of intensive studies, the inventors focused on coordination between a 5G RAN and a 6G RAN, and found that coordination of information different from coordination between a 4G RAN and a 5G RAN is required. Specifically, assuming a case where a node of a 6G RAN is deployed in stand-alone, a case is assumed where a frequency band overlapping with 5G (for example, a Low band frequency such as FR1 and FR2) is used for the purpose of expanding a coverage area.

Under such a background, communication for each beam is assumed in the 6G RAN, but communication for each beam is not assumed in coordination between the 4G RAN and the 5G RAN. Therefore, in coordination between the 5G RAN and the 6G RAN, at least it is necessary to assume communication for each beam.

Also, in coordination between the 4G RAN and the 5G RAN, coordination for each resource unit of a radio resource (for example, a PRB (Physical Resource Block) pair) is assumed, but in spectrum sharing between the 5G RAN and the 6G RAN, resource coordination between schedulers has strict delay requirements and needs to be dynamically executed within a short time. Therefore, when coordination is executed for each PRB pair similarly to coordination between the 4G RAN and the 5G RAN, there is a problem that a large amount of signaling occurs on an interface (e.g. Xn, F1) between the 5G RAN and the 6G RAN and a load increases, which may affect other functions (e.g. Handover procedure). From such a viewpoint, a case is assumed where improvement in efficiency of coordination between the 5G RAN and the 6G RAN is required.

### (4) Operation Example

In order to solve the above-described problem, the following operations may be executed. In the following, the network apparatus 50 of the first network 10A transmits information regarding a radio resource used in the first network 10A to the second network 10B. Transmission of the information regarding the radio resource is an example of coordination between the first network 10A and the second network 10B.

### (4.1) Operation Example 1

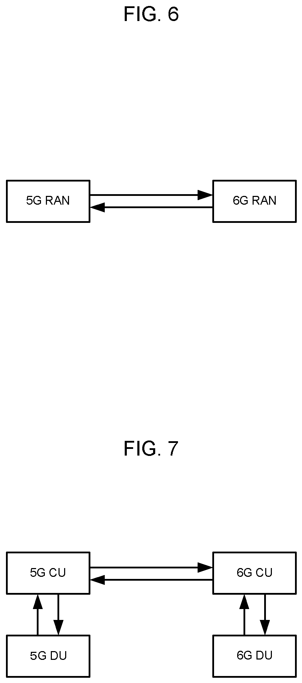

In Operation Example 1, an interface for executing communication of information regarding a radio resource used in the first network 10A will be described. As illustrated in Fig. 6, communication of information regarding a radio resource used in the first network 10A is executed via an interface between a 5G RAN and a 6G RAN. The 5G RAN may be an example of the second network 10B, or may be an example of the first network 10A. The 6G RAN may be an example of the first network 10A, or may be an example of the second network 10B. As an interface between the 5G RAN and the 6G RAN, the following options are considered.

In Option 1-1, as illustrated in Fig. 7, the interface between the 5G RAN and the 6G RAN may include an interface between a 5G DU and a 5G CU, an interface between a 5G CU and a 6G CU, and an interface between a 6G DU and a 6G CU.

In Option 1-1, when the 5G RAN is the first network 10A, the network apparatus 50 may be a 5G DU or a 5G CU. When the 6G RAN is the first network 10A, the network apparatus 50 may be a 6G DU or a 6G CU.

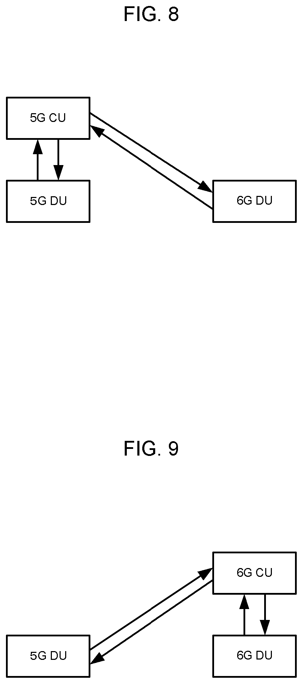

In Option 1-2, as illustrated in Fig. 8, the interface between the 5G RAN and the 6G RAN may include an interface between a 5G DU and a 5G CU, and an interface between a 5G CU and a 6G DU.

In Option 1-2, when the 5G RAN is the first network 10A, the network apparatus 50 may be a 5G DU or a 5G CU. When the 6G RAN is the first network 10A, the network apparatus 50 may be a 6G CU.

In Option 1-3, as illustrated in Fig. 9, the interface between the 5G RAN and the 6G RAN may include an interface between a 5G DU and a 6G CU, and an interface between a 6G DU and a 6G CU.

In Option 1-3, when the 5G RAN is the first network 10A, the network apparatus 50 may be a 5G DU. When the 6G RAN is the first network 10A, the network apparatus 50 may be a 6G DU or a 6G CU.

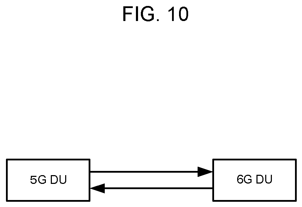

In Option 1-4, as illustrated in Fig. 10, the interface between the 5G RAN and the 6G RAN may include an interface between a 5G DU and a 6G DU.

In Option 1-4, when the 5G RAN is the first network 10A, the network apparatus 50 may be a 5G DU. When the 6G RAN is the first network 10A, the network apparatus 50 may be a 6G DU.

### (4.2) Operation Example 2

In Operation Example 2, information regarding a radio resource used in the first network 10A (hereinafter, a used radio resource) will be described. The information regarding the used radio resource includes information regarding a beam. As the information regarding the used radio resource, the following options are considered.

In Option 2-1, the information regarding the used radio resource may be information having an RE (Resource Element) as a minimum unit. The information regarding the used radio resource may be represented by a bit string indicating a usage status of one or more REs. For example, in the bit string, the fact that the RE is used may be represented by "1", and the fact that the RE is not used may be represented by "0".

In Option 2-2, the information regarding the used radio resource may be information having an RB (Resource Block) as a minimum unit. The information regarding the used radio resource may be represented by a bit string indicating a usage status of one or more RBs. For example, in the bit string, the fact that the RB is used may be represented by "1", and the fact that the RB is not used may be represented by "0".

In Option 2-3, the information regarding the used radio resource may be information regarding a radio resource of a downlink signal. The downlink signal may be one or more signals selected from an SSB (PSS, SSS, PBCH, DM-RS for PBCH), a CSI-RS, a DM-RS, a PT-RS, a PRS, a TRS, a PDCCH, a PDSCH, and signals corresponding to these.

In Option 2-4, the information regarding the used radio resource may be information regarding a radio resource of an uplink signal. The uplink signal may be one or more signals selected from an SRS, a PUCCH, a PUSCH, and signals corresponding to these.

In Option 2-5, coordination of information regarding a radio resource of a downlink signal and coordination of information regarding a radio resource of an uplink signal may be executed separately. The separate execution may mean transmitting information in separate signals, or may mean transmitting one information and not transmitting the other information.

In Option 2-6, coordination of information regarding the used radio resource may be executed for each frequency. The information regarding the used radio resource may include frequency information (for example, ARFCN; Absolute Radio-Frequency Channel number).

In Option 2-7, coordination of information regarding the used radio resource may be executed for each cell. The information regarding the used radio resource may include a cell ID.

In Option 2-8, coordination of information regarding the used radio resource may be executed for each beam. The information regarding the used radio resource may include a beam ID. In Option 2-8, coordination of information regarding the used radio resource may be considered to be executed for each SSB, and may be considered to be executed for each CSI-RS. Option 2-8 may be used when the first network 10A is a 6G RAN. Option 2-8 may be an example of information regarding a beam.

In Option 2-9, coordination of information regarding the used radio resource may be executed for each group including one or more beams. The information regarding the used radio resource may include a group ID including one or more beams. Option 2-9 may be used when the first network 10A is a 6G RAN. Option 2-9 may be an example of information regarding a beam.

In Option 2-10, coordination of information regarding the used radio resource may be executed for each cell group including one or more cells. The information regarding the used radio resource may include a cell group ID, and may include a spectrum sharing group ID.

In Option 2-11, a unit for notifying information regarding the used radio resource may be for each PRB (Physical Resource Block), or may be for each PRB pair.

In Option 2-12, a unit in a time direction for notifying information regarding the used radio resource may be for each slot, or may be for each subframe.

In Option 2-13, a unit in a frequency direction for notifying information regarding the used radio resource may be for each of two or more sub-carriers (for example, 12 sub-carriers).

In Option 2-14, the information regarding the used radio resource may include information indicating a pattern of an SSB, and may include information indicating a pattern of a reference signal (for example, a CSI-RS). The SSBs may be transmitted in order using different beams. The reference signals (for example, CSI-RSs) may be transmitted in order using different beams. Option 2-14 may be used when the first network 10A is a 6G RAN.

In Option 2-15, the information regarding the used radio resource may include one or more pieces of information selected from a band, an SCS, a cyclic prefix, a transmission cycle of DL-UD, symbol allocation information in a slot, and permutation. The symbol allocation information in the slot may include the number of DL symbols, may include the number of UL symbols, and may include a DL-UL pattern. Permutation may be information for distinguishing a slot format of DFU (Downlink-Flexible-Uplink) and a slot format of UFD (Uplink-Flexible-Downlink).

In Option 2-16, the information regarding the used radio resource may include information predicted by AIML (Artificial Intelligence and Machine Learning). AIML may be artificial intelligence or machine learning. Prediction may be executed by any one or more nodes included in the first network 10A. The predicted information may include one or more pieces of information selected from Options 2-1 to 2-15 described above.

In Option 2-17, the information regarding the used radio resource may be transmitted from the first network 10A in response to a request from the second network 10B, or regardless of a request from the second network 10B. The information regarding the used radio resource may be transmitted dynamically, or may be transmitted semi-statically. In semi-static transmission, the second network 10B may instruct the first network 10A on a transmission cycle of the information regarding the used radio resource.

In Operation Example 2, in Option 2-18, two or more options selected from Option 2-1 to Option 2-17 may be combined.

### (4.3) Operation Example 3

In Operation Example 3, information regarding a radio resource used in the first network 10A (used radio resource) will be described. The information regarding the used radio resource is information regarding a resource group grouped for each resource unit of the radio resource. Grouping may be read as patterning, and a resource group may be read as a resource pattern. As Operation Example 3, the following options are considered.

In Option 3-1, the resource unit of the radio resource may be a unit selected from an RE, a PRB, a PRB pair, a subframe, a slot, and a symbol. The resource group may include N (for example, 40, 80, 120) continuous resource units. In the resource group, the fact that the resource unit is used may be represented by "1", and the fact that the resource unit is not used may be represented by "0".

In Option 3-2, a validity period is determined for the resource group. The validity period may be managed by a new timer. The network apparatus 50 of the first network 10A may start a new timer in response to transmission of the information regarding the used radio resource. The network apparatus 50 of the second network 10B may start a new timer in response to reception of the information regarding the used radio resource. The validity period may expire upon expiration of the new timer. A value (time) set to the new timer may be specified by the first network 10A, may be specified by the second network 10B, or may be predefined in the radio communication system 10.

In Option 3-3, the information regarding the used radio resource may be transmitted semi-statically (or periodically). In such a case, a transmission cycle of the information regarding the used radio resource may be considered to be the validity period of the resource group.

In Option 3-4, the network apparatus 50 of the first network 10A may transmit information regarding a configuration of the resource group. The information regarding the configuration of the resource group may include the number of resource units included in the resource group (N described in Option 3-1), and may include a type of the resource unit (RE, PRB, PRB pair, subframe, slot, symbol). As Option 3-4, the following options are considered.

In Option 3-4-1, the network apparatus 50 of the first network 10A may transmit information specifying a configuration of one resource group as the information regarding the configuration of the resource group. In such a case, the network apparatus 50 of the first network 10A may receive an acknowledgment (ACK/NACK) for the information regarding the configuration of the resource group from the second network 10B.

In Option 3-4-2, the network apparatus 50 of the first network 10A may transmit information specifying candidates for configurations of two or more resource groups as the information regarding the configuration of the resource group. In such a case, the network apparatus 50 of the first network 10A may receive information specifying a configuration of a resource group selected from the candidates for the configurations of the two or more resource groups from the second network 10B.

In Option 3-4, when Dual Connectivity is applied, the network apparatus 50 of the first network 10A may be a Master node, and the network apparatus 50 of the second network 10B may be a Secondary node.

In Option 3-5, the network apparatus 50 of the first network 10A may transmit first information and second information as information regarding a radio resource. The first information may be read as previous information regarding a radio resource, and the second information may be read as new information regarding a radio resource. In such a case, the network apparatus 50 of the second network 10B may determine that the first information is valid after receiving the first information until receiving the second information. In other words, the network apparatus 50 of the first network 10A may assume that the second network 10B determines that the first information is valid after the first information is transmitted until the second information is transmitted.

In Option 3-6, when the validity period of the resource group (for example, the validity period described in Option 3-2) expires, the network apparatus 50 of the first network 10A may stop the use of the resource group whose validity period has expired. When the validity period of the resource group expires, the network apparatus 50 of the first network 10A may redo coordination of the information regarding the used radio resource.

In Option 3-7, when the validity period of the resource group (for example, the validity period described in Option 3-2) expires, the network apparatus 50 of the second network 10B may stop the use of the resource group whose validity period has expired. When the validity period of the resource group expires, the network apparatus 50 of the second network 10B may redo coordination of the information regarding the used radio resource.

In Operation Example 3, two or more options selected from Option 3-1 to Option 3-7 may be combined.

### (5) Operations and Effects

In the embodiment, the network apparatus 50 of the first network 10A transmits information regarding a radio resource used in the first network 10A to the second network 10B. According to such a configuration, in migration from 5G to 6G (for example, dynamic spectrum sharing between 5G and 6G), coordination between a 5G RAN and a 6G RAN can be appropriately executed.

In the embodiment, the information regarding the used radio resource may include information regarding a beam (for example, Option 2-8, Option 2-9). According to such a configuration, assuming communication for each beam in 6G, coordination between the 5G RAN and the 6G RAN can be executed with a finer granularity than the existing technology.

In the embodiment, the information regarding the used radio resource may include information predicted by AIML (for example, Option 2-16). According to such a configuration, a transmission frequency of the information regarding the used radio resource can be reduced.

In the embodiment, the information regarding the used radio resource is information regarding a resource group grouped for each resource unit of the radio resource. According to such a configuration, coordination of the used radio resource can be executed efficiently, compared with a case where coordination of the used radio resource is executed in a resource unit (for example, an RE, a PRB, a PRB pair).

### (6) Other Embodiments

Although the contents of the present invention have been described above along with the embodiments, the present invention is not limited to these descriptions, and it is obvious to those skilled in the art that various modifications and improvements can be made.

The block configuration diagrams (Fig. 4 and Fig. 5) used in the description of the above-described embodiments show blocks in functional units. These functional blocks (configuration units) are realized by any arbitrary combination of at least one of hardware and software. In addition, a realization method of each functional block is not particularly limited. That is, each functional block may be realized using one device that is physically or logically coupled, or two or more devices that are physically or logically separated may be directly or indirectly connected (for example, using wired, wireless, etc.) and realized using these plurality of devices. The functional block may be realized by combining software with the above-described one device or the above-described plurality of devices.

Functions include judging, determining, calculating, computing, processing, deriving, investigating, looking up, search, inquiry, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like, but are not limited thereto. For example, a functional block (configuration unit) that causes transmission to function is called a transmitting unit or a transmitter. In any case, as described above, the realization method is not particularly limited.

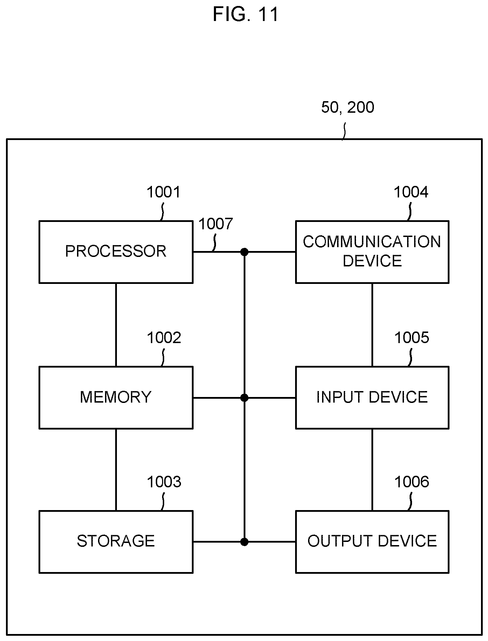

Furthermore, the above-described network apparatus 50 and UE 200 (the device) may function as a computer that performs the processing of the radio communication method of the present disclosure. Fig. 11 is a diagram illustrating an example of a hardware configuration of the device. As illustrated in Fig. 11, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, or the like. The hardware configuration of the device may be configured to include one or a plurality of the respective devices illustrated in the drawings, or may be configured not to include some of the devices.

Each functional block (see Fig. 4) of the device is realized by any hardware element of the computer device or a combination of the hardware elements.

In addition, each function in the device is realized by causing the processor 1001 to perform computation by loading predetermined software (program) on hardware such as the processor 1001 and the memory 1002, and controlling communication by the communication device 1004, or controlling at least one of reading and writing of data in the memory 1002 and the storage 1003.

The processor 1001 operates, for example, an operating system to control the entire computer. The processor 1001 may be configured by a central processing unit (CPU) including an interface with a peripheral device, a control device, an arithmetic device, a register, and the like.

In addition, the processor 1001 reads a program (program code), a software module, data, and the like from at least one of the storage 1003 and the communication device 1004 into the memory 1002, and executes various processes according to them. As the program, a program that causes a computer to execute at least a part of the operations described in the above-described embodiments is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of a Read Only Memory (ROM), an Erasable Programmable ROM (EPROM), an Electrically Erasable Programmable ROM (EEPROM), a Random Access Memory (RAM), and the like, for example. The memory 1002 may be referred to as a register, a cache, a main memory (main storage device), or the like. The memory 1002 can store a program (program code), a software module, and the like capable of executing a method according to an embodiment of the present disclosure.

The storage 1003 is a computer-readable recording medium, and may be configured by at least one of an optical disc such as a Compact Disc ROM (CD-ROM), a hard disk drive, a flexible disk, a magneto-optical disc (for example, a compact disc, a digital versatile disc, a Blu-ray (registered trademark) disc), a smart card, a flash memory (for example, a card, a stick, a key drive), a floppy (registered trademark) disk, a magnetic strip, and the like, for example. The storage 1003 may be referred to as an auxiliary storage device. The above-described recording medium may be, for example, a database, a server, or other appropriate medium including at least one of the memory 1002 and the storage 1003.

The communication device 1004 is hardware (transmission/reception device) for performing communication between computers via at least one of a wired network and a wireless network, and is also referred to as, for example, a network apparatus, a network controller, a network card, a communication module, or the like.

The communication device 1004 may be configured to include a high frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts an input from the outside. The output device 1006 is an output device (for example, a display, a speaker, an LED lamp, etc.) that implements an output to the outside. Note that the input device 1005 and the output device 1006 may have an integrated configuration (for example, a touch panel).

In addition, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and some or all of each functional block may be realized by the hardware. For example, the processor 1001 may be implemented using at least one of these hardware.

Further, the notification of information is not limited to the aspects/embodiments described in the present disclosure, and may be performed using other methods. For example, the notification of information may be implemented by physical layer signaling (e.g., Downlink Control Information (DCI), Uplink Control Information (UCI)), higher layer signaling (e.g., RRC signaling, Medium Access Control (MAC) signaling, broadcast information (Master Information Block (MIB), System Information Block (SIB))), other signals, or a combination thereof. Further, the RRC signaling may be referred to as an RRC message, and may be, for example, an RRC Connection Setup message, an RRC Connection Reconfiguration message, or the like.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next-generation system extended based on these. Further, a plurality of systems may be applied in combination (for example, a combination of at least one of LTE and LTE-A and 5G, etc.).

The processing procedures, sequences, flowcharts, etc. of each aspect/embodiment described in the present disclosure may be reordered as long as there is no contradiction. For example, regarding the methods described in the present disclosure, the elements of the various steps are presented using an exemplary order, and are not limited to the specific order presented.

The specific operation that is performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, an MME, an S-GW, etc. can be considered, but are not limited thereto). Although the case where there is one other network node other than the base station is exemplified above, it may be a combination of a plurality of other network nodes (e.g., an MME and an S-GW).

Information, signals (information, etc.) can be output from a higher layer (or a lower layer) to a lower layer (or a higher layer). It may be input/output via a plurality of network nodes.

The input/output information may be stored in a specific location (e.g., memory) or managed using a management table. The input/output information may be overwritten, updated, or appended. The output information may be deleted. The input information may be transmitted to another device.

The determination may be made by a value represented by 1 bit (0 or 1), may be made by a Boolean value (true or false), or may be made by comparing numerical values (e.g., comparison with a predetermined value).

Each aspect/embodiment described in the present disclosure may be used alone, in combination, or may be switched in accordance with execution. Further, notification of predetermined information (for example, notification of "being X") is not limited to being performed explicitly, but may be performed implicitly (for example, by not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, etc., regardless of whether it is referred to as software, firmware, middleware, microcode, hardware description language, or by other names.

Further, software, instructions, information, etc. may be transmitted and received via a transmission medium. For example, when software is transmitted from a website, server, or other remote source using at least one of wired technologies (coaxial cable, optical fiber cable, twisted pair, Digital Subscriber Line (DSL), etc.) and wireless technologies (infrared, microwave, etc.), at least one of these wired technologies and wireless technologies is included within the definition of a transmission medium.

The information, signals, etc. described in the present disclosure may be represented using any of a variety of different technologies. For example, data, instructions, commands, information, signals, bits, symbols, chips, etc. that may be referred to throughout the above description may be represented by voltages, currents, electromagnetic waves, magnetic fields or magnetic particles, optical fields or photons, or any combination thereof.

Note that the terms described in the present disclosure and the terms necessary for understanding the present disclosure may be replaced with terms having the same or similar meanings. For example, at least one of a channel and a symbol may be a signal (signaling). Further, a signal may be a message. In addition, a component carrier (CC) may be referred to as a carrier frequency, a cell, a frequency carrier, or the like.

The terms "system" and "network" used in the present disclosure are used interchangeably.

Further, the information, parameters, etc. described in the present disclosure may be represented using absolute values, may be represented using relative values from predetermined values, or may be represented using other corresponding information. For example, a radio resource may be indicated by an index.

The names used for the above-described parameters are not restrictive names in any respect. Furthermore, equations, etc. using these parameters may differ from those explicitly disclosed in the present disclosure. Since various channels (e.g., PUCCH, PDCCH, etc.) and information elements can be identified by any suitable names, the various names assigned to these various channels and information elements are not restrictive names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. A base station may also be referred to by terms such as a macro cell, a small cell, a femto cell, and a pico cell.

A base station can accommodate one or a plurality of (for example, three) cells (also referred to as sectors). When a base station accommodates a plurality of cells, the entire coverage area of the base station can be partitioned into a plurality of smaller areas, and each smaller area can also provide communication services via a base station subsystem (for example, a small indoor base station (Remote Radio Head: RRH)).

The term "cell" or "sector" refers to a part or the whole of the coverage area of at least one of a base station and a base station subsystem that performs a communication service in this coverage.

In the present disclosure, terms such as "Mobile Station (MS)", "user terminal", "User Equipment (UE)", and "terminal" can be used interchangeably.

A mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terminology.

At least one of a base station and a mobile station may be referred to as a transmitting device, a receiving device, a communication device, or the like. Note that at least one of a base station and a mobile station may be a device mounted on a moving body, the moving body itself, or the like. The moving body may be a vehicle (e.g., a car, an airplane, etc.), an unmanned moving body (e.g., a drone, an autonomous vehicle, etc.), or a robot (manned or unmanned). Note that at least one of a base station and a mobile station also includes a device that does not necessarily move during a communication operation. For example, at least one of a base station and a mobile station may be an Internet of Things (IoT) device such as a sensor.

Further, the base station in the present disclosure may be read as a mobile station (user terminal, the same applies hereinafter). For example, each aspect/embodiment of the present disclosure may be applied to a configuration in which communication between a base station and a mobile station is replaced with communication between a plurality of mobile stations (e.g., which may be referred to as Device-to-Device (D2D), Vehicle-to-Everything (V2X), etc.). In this case, the mobile station may have the functions that the base station has. In addition, terms such as "uplink" and "downlink" may be read as terms corresponding to inter-terminal communication (e.g., "side"). For example, an uplink channel, a downlink channel, etc. may be read as a side channel.

Similarly, the mobile station in the present disclosure may be read as a base station. In this case, the base station may have the functions that the mobile station has.

A radio frame may be configured with one or a plurality of frames in a time domain. Each of the one or plurality of frames in the time domain may be referred to as a subframe.

A subframe may be further configured with one or a plurality of slots in the time domain. A subframe may have a fixed time length (for example, 1 ms) that does not depend on numerology.

Numerology may be a communication parameter applied to transmission and/or reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in a frequency domain, specific windowing processing performed by a transceiver in a time domain, and the like.

A slot may be configured with one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini slots. Each mini slot may be configured with one or a plurality of symbols in the time domain. In addition, a mini slot may be referred to as a subslot. A mini slot may be configured with a smaller number of symbols than a slot. A PDSCH (or PUSCH) transmitted in a time unit larger than a mini slot may be referred to as a PDSCH (or PUSCH) mapping type A. A PDSCH (or PUSCH) transmitted using a mini slot may be referred to as a PDSCH (or PUSCH) mapping type B.

A radio frame, a subframe, a slot, a mini slot, and a symbol all represent a time unit when transmitting a signal. For a radio frame, a subframe, a slot, a mini slot, and a symbol, other corresponding names may be used respectively.

For example, one subframe may be referred to as a Transmission Time Interval (TTI), a plurality of consecutive subframes may be referred to as a TTI, or one slot or one mini slot may be referred to as a TTI. That is, at least one of a subframe and a TTI may be a subframe (1 ms) in the existing LTE, may be a period shorter than 1 ms (e.g., 1 to 13 symbols), or may be a period longer than 1 ms. Note that a unit representing a TTI may be referred to as a slot, a mini slot, or the like instead of a subframe.

Here, a TTI refers to, for example, a minimum time unit of scheduling in radio communication. For example, in the LTE system, a base station performs scheduling to allocate radio resources (frequency bandwidth, transmission power, etc. that can be used in each user terminal) to each user terminal in units of TTIs. Note that the definition of a TTI is not limited to this.

A TTI may be a transmission time unit of a channel-encoded data packet (transport block), a code block, a codeword, or the like, or may be a processing unit for scheduling, link adaptation, or the like. Note that when a TTI is given, a time interval (e.g., the number of symbols) in which a transport block, a code block, a codeword, or the like is actually mapped may be shorter than the TTI.

Note that when one slot or one mini slot is referred to as a TTI, one or more TTIs (that is, one or more slots or one or more mini slots) may be the minimum time unit of scheduling. Also, the number of slots (number of mini slots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than a normal TTI may be referred to as a shortened TTI, a short TTI, a partial TTI (partial or fractional TTI), a shortened subframe, a short subframe, a mini slot, a subslot, a slot, or the like.

Note that a long TTI (e.g., a normal TTI, a subframe, etc.) may be replaced with a TTI having a time length exceeding 1 ms, and a short TTI (e.g., a shortened TTI, etc.) may be replaced with a TTI having a TTI length less than the TTI length of the long TTI and equal to or greater than 1 ms.

A resource block (RB) is a resource allocation unit in the time domain and the frequency domain, and may include one or a plurality of consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or a plurality of symbols, and may be the length of one slot, one mini slot, one subframe, or one TTI. One TTI, one subframe, etc. may each be configured with one or a plurality of resource blocks.

Note that one or a plurality of RBs may be referred to as a Physical RB (PRB), a Sub-Carrier Group (SCG), a Resource Element Group (REG), a PRB pair, an RB pair, or the like.

In addition, a resource block may be configured with one or a plurality of Resource Elements (REs). For example, 1 RE may be a radio resource region of 1 subcarrier and 1 symbol.

A bandwidth part (BWP) (which may be referred to as a partial bandwidth, etc.) may represent a subset of consecutive common resource blocks (common RBs) for a certain numerology in a certain carrier. Here, the common RB may be specified by an index of an RB based on a common reference point of the carrier. A PRB may be defined in a certain BWP and numbered within the BWP.

The BWP may include a BWP for UL (UL BWP) and a BWP for DL (DL BWP). One or a plurality of BWPs may be configured for a UE within one carrier.

At least one of configured BWPs may be active, and a UE does not need to assume to transmit and receive predetermined signals/channels outside an active BWP. Note that a "cell", a "carrier", etc. in the present disclosure may be read as a "BWP".

The structures of the radio frame, subframe, slot, mini slot, symbol, etc. described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, and the number of symbols in a TTI, a symbol length, a cyclic prefix (CP) length, etc. can be variously changed.

The terms "connected", "coupled", or any variations thereof mean any direct or indirect connection or coupling between two or more elements, and can include the presence of one or more intermediate elements between two elements that are "connected" or "coupled" to each other. The coupling or connection between elements may be physical, logical, or a combination thereof. For example, "connection" may be read as "access". When used in the present disclosure, two elements can be considered to be "connected" or "coupled" to each other using at least one of one or more wires, cables, and printed electrical connections, and, as some non-limiting and non-exhaustive examples, using electromagnetic energy having wavelengths in the radio frequency domain, microwave domain, and optical (both visible and invisible) domains.

A reference signal can also be abbreviated as Reference Signal (RS), and may be referred to as a pilot depending on standard to be applied.

As used in the present disclosure, the phrase "based on" does not mean "based only on" unless otherwise explicitly stated. In other words, the phrase "based on" means both "based only on" and "based at least on".

"Means" in the configuration of each device above may be replaced with "unit", "circuit", "device", etc.

Any reference to an element using a designation such as "first", "second", etc. used in the present disclosure does not generally limit the amount or order of those elements. These designations may be used in the present disclosure as a convenient method of distinguishing between two or more elements. Therefore, reference to the first and second elements does not imply that only two elements can be employed there, or that the first element must precede the second element in some way.

When "include", "including", and variations thereof are used in the present disclosure, these terms are intended to be inclusive, similarly to the term "comprising". Furthermore, the term "or" used in the present disclosure is intended not to be an exclusive disjunction.

In the present disclosure, for example, when an article is added by translation, such as a, an, and the in English, the present disclosure may include that the noun that follows these articles is plural.

The terms "determining" and "determining" used in the present disclosure may encompass a wide variety of actions. "Determining" and "determining" may include, for example, considering judging, calculating, computing, processing, deriving, investigating, looking up, search, inquiry (for example, search in a table, a database, or another data structure), or ascertaining as "determining" and "determining". Further, "determining" and "determining" may include considering receiving (for example, receiving information), transmitting (for example, transmitting information), input, output, or accessing (for example, accessing data in a memory) as "determining" and "determining". Further, "determining" and "determining" may include considering resolving, selecting, choosing, establishing, or comparing as "determining" and "determining". That is, "determining" and "determining" may include considering some action as "determining" and "determining". Further, "determining (determining)" may be read as "assuming", "expecting", "considering", or the like.

In the present disclosure, the term "A and B are different" may mean "A and B are different from each other". Note that this term may mean "A and B are different from C, respectively". Terms such as "leave", "coupled", etc. may also be interpreted similarly to "different".

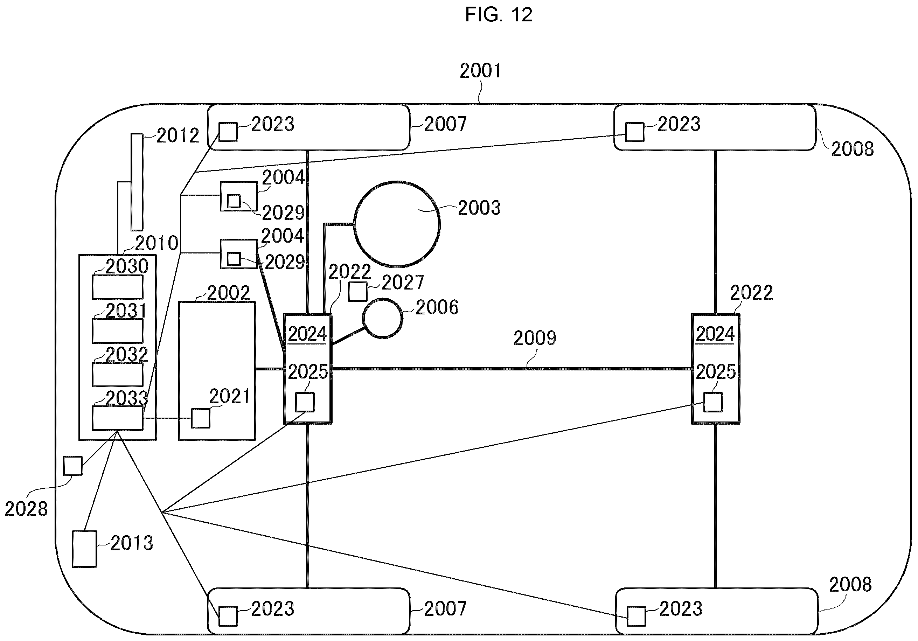

[Fig. 12] is a diagram illustrating a configuration example of a vehicle 2001. As illustrated in [Fig. 12], the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also referred to as a handle), and is configured to steer at least one of the front wheels and the rear wheels based on an operation of the steering wheel operated by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from the various sensors 2021 to 2028 include a current signal from a current sensor 2021 that senses a motor current, a rotation speed signal of the front wheels or the rear wheels acquired by a rotation speed sensor 2022, an air pressure signal of the front wheels or the rear wheels acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, a detection signal for detecting an obstacle, a vehicle, a pedestrian, and the like acquired by an object detection sensor 2028, and the like.

The information service unit 2012 is configured by various devices for providing various information such as driving information, traffic information, and entertainment information, such as a car navigation system, an audio system, a speaker, a television, and a radio, and one or more ECUs that control these devices. The information service unit 2012 provides various multimedia information and multimedia services to an occupant of the vehicle 1 using information acquired from an external device via the communication module 2013 or the like.

The driver assistance system unit 2030 is configured by various devices for providing a function for preventing accidents in advance or reducing a driving load on a driver, such as a millimeter wave radar, a LiDAR (Light Detection and Ranging), a camera, a positioning locator (for example, a GNSS, etc.), map information (for example, a high-definition (HD) map, an autonomous vehicle (AV) map, etc.), a gyro system (for example, an IMU (Inertial Measurement Unit), an INS (Inertial Navigation System), etc.), an AI (Artificial Intelligence) chip, and an AI processor, and one or more ECUs that control these devices. Also, the driver assistance system unit 2030 transmits and receives various information via the communication module 2013 to realize a driving assistance function or an automated driving function.

The communication module 2013 can communicate with the microprocessor 2031 and components of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the left and right front wheels 2007, the left and right rear wheels 2008, the axle 2009 provided in the vehicle 2001, the microprocessor 2031 and the memory (ROM, RAM) 2032 in the electronic control unit 2010, and the sensors 2021 to 2028.

The communication module 2013 is a communication device controllable by the microprocessor 2031 of the electronic control unit 2010 and capable of communicating with an external device. For example, it performs transmission and reception of various information to and from the external device via radio communication. The communication module 2013 may be inside or outside the electronic control unit 2010. The external device may be, for example, a base station, a mobile station, or the like.

The communication module 2013 transmits the current signal from the current sensor input to the electronic control unit 2010 to the external device via radio communication. Further, the communication module 2013 also transmits, to the external device via radio communication, the rotation speed signal of the front wheels or the rear wheels acquired by the rotation speed sensor 2022, the air pressure signal of the front wheels or the rear wheels acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, and the like acquired by the object detection sensor 2028, and the like input to the electronic control unit 2010.

The communication module 2013 receives various information (traffic information, signal information, inter-vehicle information, etc.) transmitted from the external device, and displays the information on the information service unit 2012 provided in the vehicle. Further, the communication module 2013 stores the various information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure defined by the descriptions of the claims. Therefore, the description of the present disclosure is for the purpose of illustrative explanation, and does not have any restrictive meaning to the present disclosure.

### (Supplementary Note)

The above-described disclosure may be expressed as follows.

A feature 1-1 is a network apparatus comprising: a control unit that controls communication of a first network; and a transmission unit that transmits information regarding a radio resource used in the first network to a second network, wherein the information regarding the radio resource includes information regarding a beam.

A feature 1-2 is the network apparatus according to the feature 1-1, wherein the information regarding the radio resource includes at least any one of a radio resource used in a synchronization signal block and a radio resource used in a reference signal.

A feature 1-3 is the network apparatus according to the feature 1-1 or the feature 1-2, wherein the information regarding the radio resource is a radio resource corresponding to a group including one or more beams.

A feature 1-4 is the network apparatus according to the feature 1-3, wherein the information regarding the radio resource includes identification information of the one or more beams.

A feature 1-5 is a radio communication system comprising: a terminal; and a network apparatus provided in a first network, wherein the network apparatus comprises a control unit that controls communication of the first network, and a transmission unit that transmits information regarding a radio resource used in the first network to a second network, and the information regarding the radio resource includes information regarding a beam.

A feature 1-6 is a radio communication method comprising: a step of controlling communication of a first network; and a step of transmitting information regarding a radio resource used in the first network to a second network, wherein the information regarding the radio resource includes information regarding a beam.

A feature 2-1 is a network apparatus comprising: a control unit that controls communication of a first network; and a transmission unit that transmits information regarding a radio resource used in the first network to a second network, wherein the information regarding the radio resource is information regarding a resource group grouped for each resource unit of the radio resource.

A feature 2-2 is the network apparatus according to the feature 2-1, wherein a validity period is determined for the resource group.

A feature 2-3 is the network apparatus according to the feature 2-1 or the feature 2-2, wherein the transmission unit transmits information regarding a configuration of the resource group.

A feature 2-4 is the network apparatus according to at least any one of the features 2-1 to 2-3, wherein the transmission unit transmits first information and second information as the information regarding the radio resource, and the control unit assumes that the second network determines that the first information is valid after the first information is transmitted until the second information is transmitted.

A feature 2-5 is a radio communication system comprising: a terminal; and a network apparatus provided in a first network, wherein the network apparatus comprises a control unit that controls communication of the first network, and a transmission unit that transmits information regarding a radio resource used in the first network to a second network, and the information regarding the radio resource is information regarding a resource group grouped for each resource unit of the radio resource.

A feature 2-6 is a radio communication method comprising: a step of controlling communication of a first network; and a step of transmitting information regarding a radio resource used in the first network to a second network, wherein the information regarding the radio resource is information regarding a resource group grouped for each resource unit of the radio resource.

### REFERENCE SIGNS LIST

10 Radio communication system
10A First network
10B Second network
20A, 20B Radio access network
30A, 30B Core network
50 Network apparatus
51 Reception unit
52 Transmission unit
53 Control unit
100A, 100B Base station
200 UE
210 Radio signal transmission and reception unit
220 Amplifier unit
230 Modulation and demodulation unit
240 Control signal and reference signal processing unit
250 Encoding and decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A network apparatus comprising:
a control unit that controls communication of a first network; and
a transmission unit that transmits information regarding a radio resource used in the first network to a second network, wherein
the information regarding the radio resource is information regarding a resource group grouped for each resource unit of the radio resource.

2. The network apparatus according to claim 1, wherein
a validity period is determined for the resource group.

3. The network apparatus according to claim 1, wherein
the transmission unit transmits information regarding a configuration of the resource group.

4. The network apparatus according to claim 1, wherein
the transmission unit transmits first information and second information as the information regarding the radio resource, and
the control unit assumes that the second network determines that the first information is valid after the first information is transmitted until the second information is transmitted.

5. A radio communication system comprising:
a terminal; and
a network apparatus provided in a first network, wherein
the network apparatus comprises:
a control unit that controls communication of the first network; and
a transmission unit that transmits information regarding a radio resource used in the first network to a second network, and
the information regarding the radio resource is information regarding a resource group grouped for each resource unit of the radio resource.

6. A radio communication method comprising:
a step of controlling communication of a first network; and
a step of transmitting information regarding a radio resource used in the first network to a second network, wherein
the information regarding the radio resource is information regarding a resource group grouped for each resource unit of the radio resource.
